# EUROPEAN PATENT SPECIFICATION

(11) **EP 2 687 421 B1**
(45) Date of publication and mention of the grant of the patent: **04.03.2015**
(21) Application number: 12290240.6
(22) Date of filing: 20.07.2012
(51) Int. Cl.: B62D 1/16, F16C 35/073, F16C 41/00, F16C 19/16

(54) **Angular contact ball bearing assembly for use in a steering column**
Schrägkugellageranordnung zur Verwendung in einer Lenksäule
Ensemble de roulement à billes à contact angulaire destiné à être utilisé dans une colonne de direction

(43) Date of publication of application: 22.01.2014
(73) Proprietor: Aktiebolaget SKF, 41 550 Göteborg (SE)
(72) Inventor: Bussit, Sylvain, 37380 Monnaie (FR); Jansen, Daniel, 37000 Tours (FR); Lepine, Thomas, 37510 Villandry (FR); Montboeuf, Bruno, 37390 Cerelles (FR)
(74) Representative: Kohl, Thomas

(56) References cited:
- EP-A1- 1 164 300
- WO-A2-2004/063577
- DE-A1- 19 922 914
- DE-A1- 19 952 119
- DE-A1- 19 955 643
- FR-A1- 2 782 758

## Description

The invention relates to an angular contact bearing assembly in a steering column.

Steering columns in automobiles are generally equipped with angular contact ball bearing assemblies comprising a conductive inner ring with a concave recess forming a first raceway, a conductive outer ring with a concave recess forming a second raceway and a set of conductive balls contacting both the first raceway and the second raceway. In order to simplify the mounting of the inner ring on a central shaft of the steering column, the inner ring is mounted on the shaft via a sleeve or tolerance ring, which is usually moulded of non-conductive plastics in order to allow for some flexibility and to reduce the costs.

Steering wheels mounted on the shaft often contain electrical switches or devices and or airbags, which may be affected by electrostatic charges accumulating on the steering wheel.

It is therefore important to ensure an electrical grounding of the steering wheel by ensuring a conductive contact between the shaft of the steering column and the chassis of the automobile via the angular ball bearings. As a matter of course, this conductive contact could be used for transmitting electrical signals as well.

The document US 4,530,609 teaches to make the sleeve conductive by using a graphite-filled polymer material, which is, however, fairly expensive.

In order to provide this electrical contact, the document FR 2782758 Al teaches to use a conductive part creating an electrically conductive contact between the inner ring and the shaft. This conductive part is a generally ring-shaped member arranged between an axial end face of the sleeve and a wavy spring or ondular washer generating an axial preload of the angular bearing. The wavy spring is preloaded with a fixing ring fitted over the shaft. The ring-shaped member is provided with a ring-shaped main body and a latch or tongue bent around the profile of the sleeve so as to overlap with a surface supporting the inner ring such that the inner ring is in contact with the latch. The electrically conductive contact between the outer ring and the shaft is therefore established from the outer ring via the balls, the inner ring, the latch, the main body of the ring-shaped member, the wavy spring, and the fixing ring.

A similar solution with a conductive element having a ring-shaped main body and multiple latch-like axial protrusions engaging in slots of the sleeve is proposed in the document US 6,675,360 B1.

A solution where the latches are immediately formed on the wavy spring is proposed in US 2010/0308569A1. A solution where latches are formed integrally with the inner ring is proposed in DE 102 20 668 B4.

In this conductive pathway, there is a high number of contact points which are susceptible to degradation or interruption of the contact and the total probability of failure accumulates the individual probabilities. Further, the latch part of the conductive part may break off from the ring-shaped main body of the conductive part during the assembly such that the conductive pathway will not be established. The loose latch may cause further problems in the assembly procedure.

The invention has been made in an attempt to solve these problems and proposes an angular contact bearing assembly according to claim 1.

The angular contact bearing assembly for use in a steering column according to the invention comprises in particular at least one rolling bearing comprising conductive components, a sleeve for mounting the at least one conductive rolling bearing on a shaft; and at least one conductive part creating an electrically conductive contact between one of the conductive components and the shaft. It is proposed that the conductive part has a circumferential extension of less than 360° and does not have a main body in the shape of (or topologically equivalent) to a full ring. The expression "circumferential extension" refers to a circumference of a rotation axis of the shaft of the steering column.

The open topology of the conductive part increases the flexibility thereof and reduces the risk that essential elements of the conductive part break off during the assembly procedure or during the use of the angular contact bearing assembly. As a consequence, the failure probability may be considerably reduced.

Preferably, the conductive components of the at least one rolling bearing include a conductive inner ring with a concave recess forming a first raceway, a conductive outer ring with a concave recess forming a second raceway, and a set of conductive balls contacting both the first raceway and the second raceway.

It is further proposed that the conductive part has a circumferential extension of less than 90°, more preferably less than 30° and in particular less than 5°. The smaller the circumferential extension is, the smaller is the probability and the typical amplitude of deformations during the assembly and, as a consequence, the smaller the probability of failures.

The fact that this specification refers to the circumferential extension of the conductive part does not mean that this part has a curvature or is arc-shaped in the circumferential direction. Rather, the contacting portion if the conductive part is preferably bent out of a flat, band-like metal part and arranged tangentially with respect to the symmetry- and rotation axis of the shaft. In other words, the conductive part has a linear/plan shape in a radial cut section. Alternatively, the conductive part has a rounded/arc-circle shape in a radial cut section.

It is to be noted that the requirement of a circumferential extension of the conductive part implies any curvature of this part in the circumferential direction. Rather, the contact portion of the conductive part may be flat and arranged tangentially with respect to the surface on which it abuts.

In a preferred embodiment of the invention, the conductive part is formed as a clip snapped on a brim of the sleeve. This facilitates the assembly and reduces the amount of material needed for the conductive part such that the overall costs of the angular contact bearing assembly may be reduced.

If the sleeve is provided with a recess with a circumferential extension corresponding to the circumferential extension of the conductive part, the clip may be secured in the circumferential direction, an unconscious shifting or loosening of the clip may be avoided, and the probability of failures may be further reduced.

Similar advantages may be achieved when the angular contact bearing assembly comprises an axial recess in a brim of the sleeve in addition to a recess in the circumferentially outer or inner surface of the sleeve or instead of such a recess.

It is further proposed that the recess extends from a radially inner surface of the sleeve to a radially outer surface of the sleeve, wherein the radially inner surface is configured to be fitted over a shaft and the radially outer surface is configured to support the conductive inner ring. In this configuration, the conductive part may be almost completely arranged in the recess so as to provide a good protection against loosening during the assembly, wherein only the contact points designed to establish the contact to the inner ring and/or to the shaft should protrude from the recess.

The failure probability may be further reduced by means of redundancy by providing the assembly with multiple conductive parts distributed over the circumference of the sleeve. Preferably, these multiple conductive parts have an identical shape.

Preferably, the conductive part is provided with a first flexible portion contacting the conductive inner ring, wherein said first flexible portion is configured such that it is deformed and preloaded when fitting the conductive inner ring over the sleeve. This flexibility may provide for some tolerance on the one hand and result in a preload of the contact points on the other hand such that the failure probability may be further reduced.

Similar advantages may be achieved if the conductive part is provided with a second flexible portion configured to contact the shaft, wherein said second flexible portion is configured such that it is deformed and preloaded when fitting the assembly including the sleeve and the conductive part over the shaft. This second flexible part may be provided in addition to the first flexible part or independent from this part.

Preferably, the first flexible portion is mechanically connected to the second flexible portion in such a way that pressure acting on the first portion is transferred to the second portion and vice versa.

According to one aspect of the invention, the conductive part has a generally C-shaped body part configured to be snapped on a brim or into a recess of the sleeve, wherein at least one of the first and the second flexible portion is formed as a tongue or latch protruding from one end of the body part. In this configuration, the C-shaped body part may ensure a good fixation on the sleeve, whereas a good electrical contact may be ensured by the tongue or latch. This separation of the functions enables an independent optimization of the respective parts of the conductive part.

It is further proposed that the conductive part is generally strip-shaped and is provided with an anchor portion in which the width of the strip is increased as compared to other portions of the conductive part, wherein a recess having a neck portion is provided in the sleeve, the width of the neck portion corresponding to the width of said other portions of the conductive part. This enables a secure anchoring of the conductive part in the sleeve and avoids an undesired slipping-off.

It is further proposed that the angular contact ball bearing is configured such that the conductive part has a generally T-shaped structure wherein a transversal bar forms the anchoring portion.

A further aspect of the invention proposes a steering column for an automotive vehicle comprising a chassis with a mounting support, a shaft and at least one angular contact bearing assembly as discussed above, wherein the angular contact bearing assembly is mounted on the chassis mounting support and supporting the shaft.

The above embodiments of the invention as well as the appended claims and figures show multiple characterizing features of the invention in specific and non-limiting combinations. The skilled person will easily be able to consider further combinations or sub-combinations of these features in order to adapt the invention as defined in the claims to his or her specific needs.
Fig. 1 is a schematic view of a steering column with an angular contact bearing assembly according to the invention;
Fig. 2 is a perspective view of a sleeve of the angular contact bearing assembly of Figure 1;
Figs. 3a - 3c are different views of a clip-like conductive part of the angular contact bearing assembly of Figure 1;
Fig. 4 is a sectional view of the angular contact bearing assembly with the sleeve and the conductive part of Figs. 2 and 3;
Figs. 5a - 5c are different views of a clip-like conductive part of the angular contact bearing assembly according to a second embodiment of the invention;
Fig. 6 is a sectional view of the angular contact bearing assembly with the conductive part of Figs. 5a - 5c;
Figs. 7a - 7c are different views of a clip-like conductive part of the angular contact bearing assembly according to a third embodiment of the invention;
Fig. 8 is a perspective view of a sleeve of an angular contact bearing assembly with the conductive part of Figs. 7a - 7c;
Figs. 9a - 9c are different views of a clip-like conductive part of the angular contact bearing assembly according to a fourth embodiment of the invention;
Fig. 10 is a perspective view of a sleeve of an angular contact bearing assembly with the conductive part of Figs. 9a - 9c;
Figs. 11a - 11c are different views of the sleeve according to Fig. 10;
Fig. 12 is a sectional view the angular contact bearing assembly with a conductive part according to the fourth embodiment of the invention;
Figs. 13a - 13c are different views of a clip-like conductive part of the angular contact bearing assembly according to a fifth embodiment of the invention;
Fig. 14 is a perspective view of a sleeve of an angular contact bearing assembly with the conductive part of Figs. 13a - 13c;
Fig. 15 is a sectional view the angular contact bearing assembly with a conductive part according to the fifth embodiment of the invention;
Figs. 16a 16c are different views of a clip-like conductive part of the angular contact bearing assembly according to a sixth embodiment of the invention; and
Fig. 17 is a sectional view the angular contact bearing assembly with a conductive part according to the sixth embodiment of the invention.

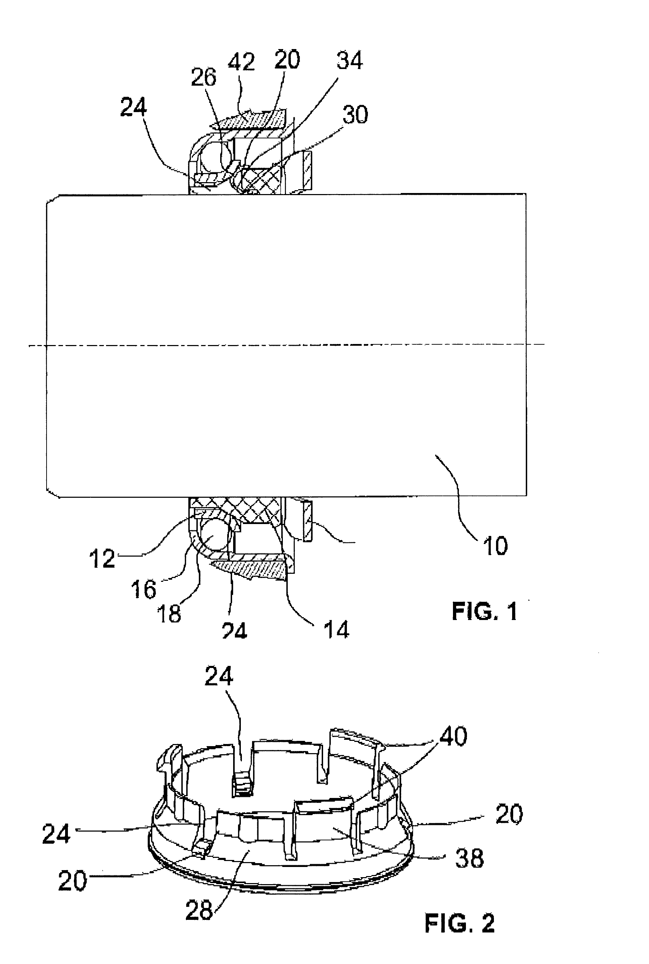

Fig. 1 is a schematic sectional view of an angular contact bearing assembly in a steering column of an automobile. The bearing assembly is mounted on a central shaft 10 connecting a steering wheel with steering rods (not shown).

The angular contact bearing assembly comprises a rolling bearing having conductive components. In particular, the rolling bearing comprises a conductive inner ring 12 with a concave recess forming a first raceway. The inner ring 12 is formed as a stamped and hardened sheet-metal piece in the illustrated embodiment, but could be made massive in the alternative.

The inner ring 12 is mounted on the shaft 10 via a plastic sleeve 14 contacting a conical inner surface of the inner ring 12 and has a, certain elasticity such that the inner surface of the sleeve 14 is deformed radially inward when the inner ring 12 is pressed on the sleeve 14 such that a force-fitting connection between the inner ring 12 and the sleeve 14 is established. Further, the angular contact bearing assembly comprises a conductive outer ring 16 with a concave recess forming a second raceway and being mounted in electrical contact with the chassis and the grounding of the automobile. The outer ring 16 is formed as a stamped a hardened sheet-metal piece in the illustrated embodiment, but could be made massive in the alternative.

The outer ring 16 is mounted in a chassis mounting support 42 of a steering column of an automotive vehicle.

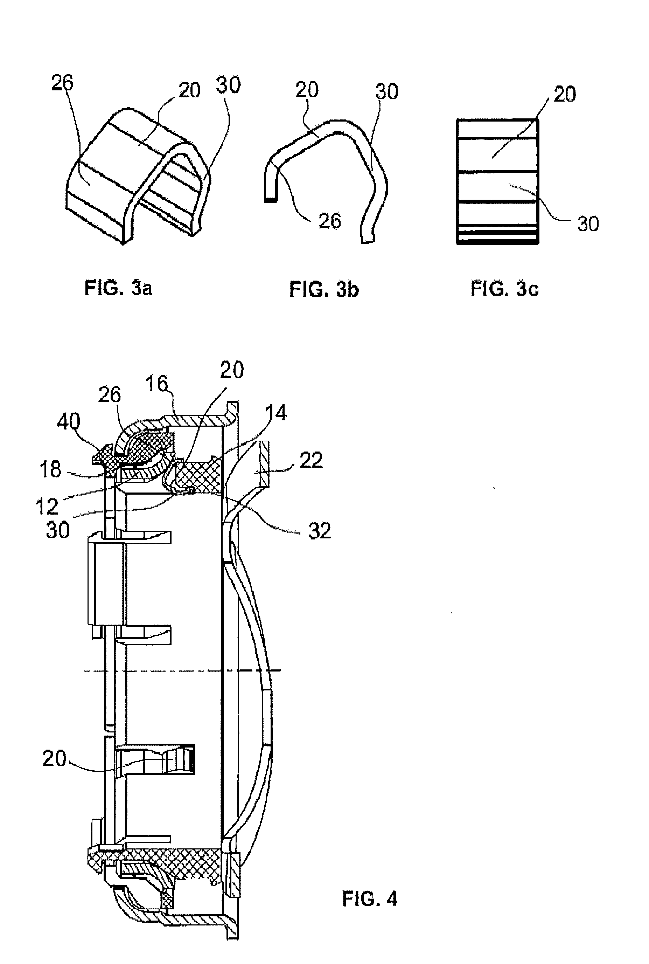

A set of conductive balls 18 contacting both the first raceway and the second raceway is guided in a cage40 (Fig. 4) and establishes an electrically conductive contact between the inner ring 12 and the outer ring 16.

As the sleeve 14 is non-conductive, a means for creating an electrically conductive contact between the inner ring 12 and the shaft 10 is needed on order enable a discharging of static electricity from the shaft 10 to the chassis of the automobile because accumulating static electricity could affect the function of electrical or electronical elements arranged on the steering wheel and/or electrical shocks.

In order to create this electrically conductive contact, the invention proposes to provide least one conductive part 20 creating an electrically conductive contact between the inner ring 12 and the shaft 10. In contrast to other known conductive parts of this type, the conductive part 20 is not provided with a ring-shaped main body, i.e. has a circumferential extension with reference to the rotation axis of the shaft 10 of less than 360°.

In the embodiment of Figs. 1 - 4, three identical conductive parts 20 are provided which are formed as a clip snapped on a brim of the sleeve 14 respectively. The circumferential extension of this clip or the angular range as referred to the central axis of the shaft 10 covered by this clip is clearly less than 10°, even less than 5°.

The angular contact ball bearing is preloaded with a corrugated or wavy spring 22 or an ondular washer abutting to an axial end face of the sleeve 14 in order to generate an axial preload of the angular contact bearing assembly. The wavy spring 22 is a part separate from the conductive part 20 and made of elastic steel, whereas the conductive part 20 may optionally be coated with or made of copper or other highly conductive materials.

Fig. 2 is a perspective view of the sleeve 14 of the angular contact bearing assembly of Figure 1. The sleeve 14 is provided with three recesses 24 with a circumferential extension or width slightly wider than the circumferential extension of the conductive part 20. The recesses 24 are large enough to enable a free movement of the conductive part 20 in the radial and axial directions.

The recess 24 comprises an axial recess in a brim of the sleeve 14 and extends from a radially inner surface 32 of the sleeve 14 to a radially outer surface 28 of the sleeve 14, wherein the radially inner surface 32 is configured to be fitted over a shaft 10 and the radially outer surface 28 is configured to support the conductive inner ring 12. Though the first embodiment illustrated here is provided with three conductive parts 20, it is clearly possible to use more or less conductive parts 20 distributed over the circumference of the sleeve 14 and clipped in pertinent recesses respectively. The brim is provided with further axial slots creating radially flexible latches 38. Three of the latches are provided with snap-fitting protrusions 40 projecting radially outward and having a chamfered end-face. The snap-fitting protrusions 40 will snap over an axially outer edge of the outer ring 16 such that the sleeve 14 loosely fixes the inner ring 12 to the outer ring 16.

Figs. 3a, 3b and 3c illustrate different views of the conductive part 20 prior to assembly and Fig. 4 shows the sleeve 14 and the conductive part 20 if the first embodiment in an assembled state. The conductive part 20 is provided with a first flexible portion 26 contacting the conductive inner ring 12, wherein said first flexible portion 26 is configured such that it is deformed and preloaded when fitting the conductive inner ring 12 over the sleeve 14. This means that the first flexible portion 26 projects radially and axially over the conical outer surface 28 of the sleeve 14 in the non-preloaded state prior to fitting the inner ring 12 onto the assembly.

In a similar way, the conductive part 20 is provided with a second flexible portion 30 configured to contact the shaft 10, wherein said second flexible portion 30 is configured such that it is deformed and preloaded when fitting the assembly including the sleeve 14 and the conductive part 20 over the shaft 10. In other words, the second flexible portion 30 projects radially inward over the cylindrical inner surface 32 of the sleeve 14 in the unpreloaded state prior to fitting the sleeve 14 onto the shaft 10 and is pushed radially outward when the shaft 10 is pushed into the assembly from the left hand side in Fig. 4.

The conductive part 20 has a generally C-shaped body part configured to be snapped on a brim or into one of the recesses 24 of the sleeve 14.

The assembly is illustrated in its mounted configuration in the sectional view of Fig. 1. Since pressure is exerted on both the first flexible portion 26 and the second flexible portion of the conductive part 20, the conductive part 20 is compressed radially such that its central part is lifted off the bottom of the recess 24 in the sleeve. The elastic restoring force of the conductive part 20 generates a contact pressure by which the first flexible portion 26 and the second flexible portion of the conductive part 20 are strongly pressed against the shaft 10 and the inner ring 12 respectively such that a good electrical contact is ensured.

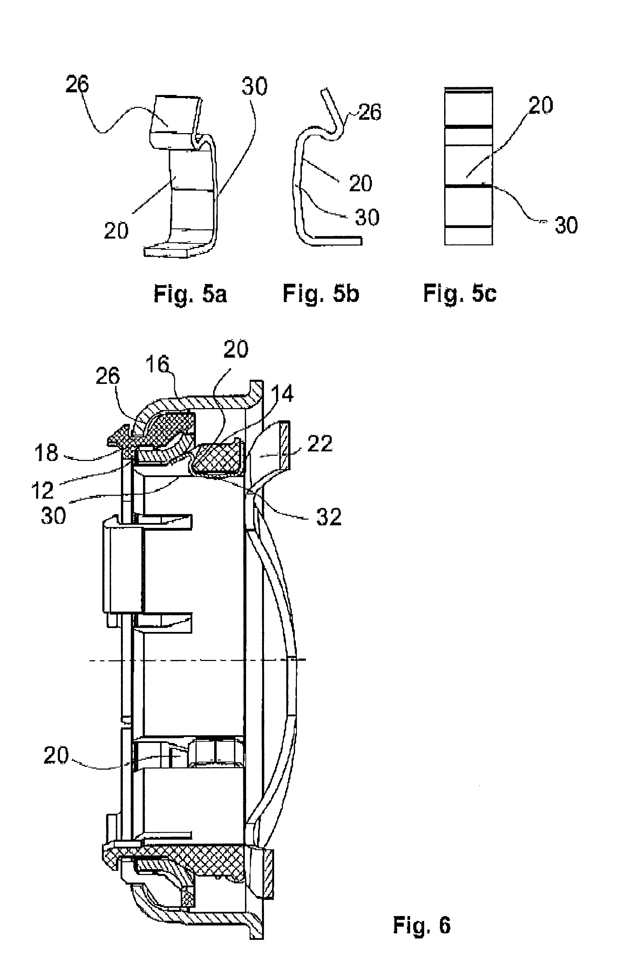

Figures 5 - 17 show further embodiments of the invention. The following description focuses on differences to the embodiment of Figs. 1 - 4, whereas the reader should refer to the foregoing description of Figs. 1 - 4 for the explanation of features which are essentially unchanged. Similar or identical features are provided with the same reference numbers in order to highlight the similarities.

Figs. 5a - 5c illustrate a clip-like conductive part 20 of the angular contact bearing assembly according to a second embodiment of the invention and Fig. 6 is a sectional view of the angular contact bearing assembly with the conductive parts 20 of Fig. 5a - 5c. The characteristic feature of this embodiment is that the first flexible portion 26 contacting the conductive inner ring 12 is formed as a tongue protruding from one end of a C-shaped body part of the conductive part 20.

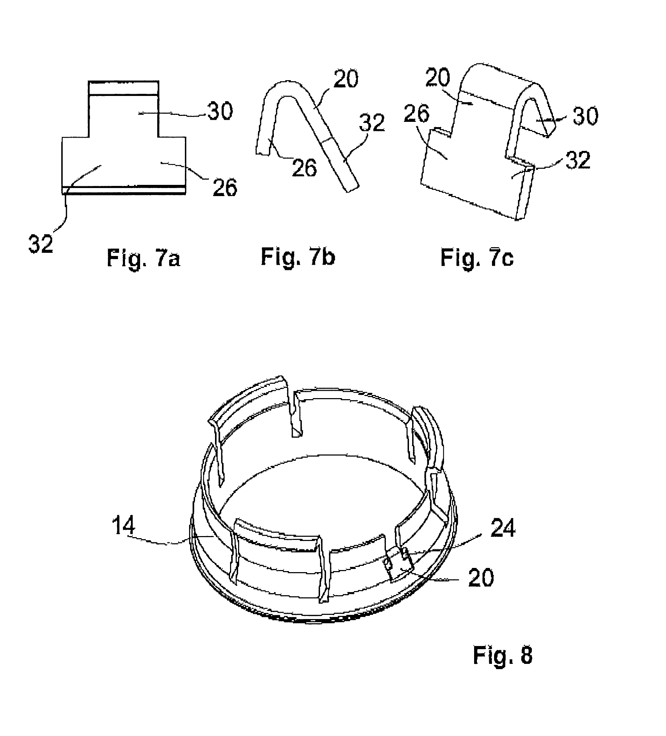

Figs. 7a - 7c illustrate a clip-like conductive part 20 of the angular contact bearing assembly according to a third embodiment of the invention and Fig. 8 is a sectional view of the angular contact bearing assembly with the conductive part 20 of Figs. 7a - 7c.

In the third embodiment, the conductive part 20 is mainly strip-shaped but is provided with an anchoring portion 34 in which the width of the strip is increased as compared to other portions of the conductive part 20. A recess 24 having a neck portion is provided in the sleeve 14. As shown in Fig. 8, width of the neck portion corresponds to the width of said other portions of the conductive part 20. More specifically, both the conductive part 20 and the recess 24 have a generally T-shaped structure wherein a transversal bar of this shape forms the anchoring portion 34. The recess 24 allows for some movement of the transversal bar in a direction perpendicular to the transversal bar forming the anchoring portion 34.

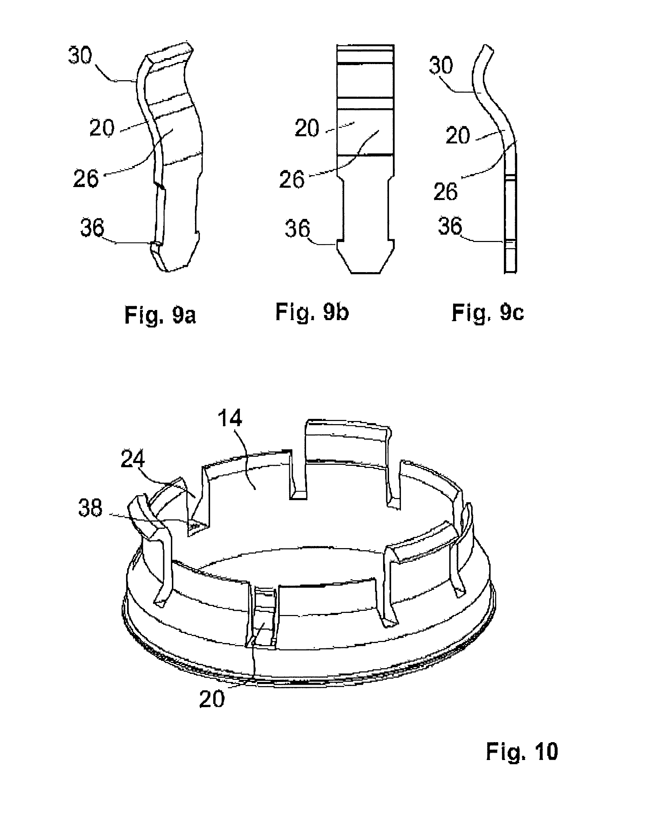

Figs. 9a - 9c, 10 and 11a - 11c illustrate a fourth embodiment of the invention. The conductive parts 20 are formed as lengthy pins which may be inserted into pertinent slots 38 provided in the bottom of recesses 24 of a sleeve 14. The fixing portion of the conductive parts 20 is provided with barbs 36 engaging with the plastic material of the sleeve 14 such that an inseparable connection between the sleeve 14 and the conductive parts 20 is created.

The sleeve 14 is provided with recesses 24, from the bottom of which the conductive parts 20 protrude axially in an S-shape which is configured such that a first convex contacting portion 26 for directly contacting the inner ring 12 of the bearing assembly and a second convex contacting portion 30 for directly contacting the shaft 10 are created.

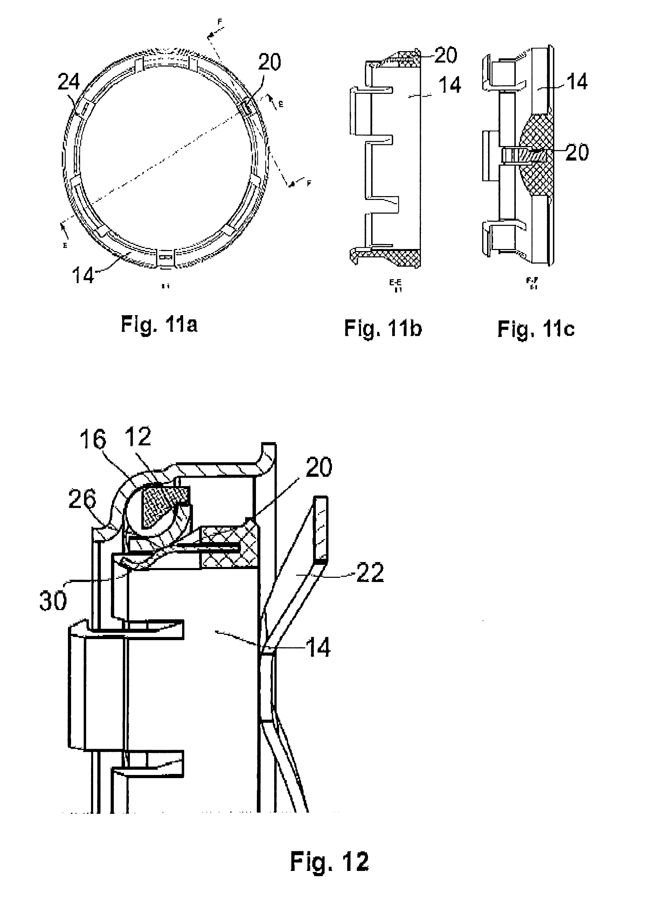

Fig. 11a is a top view of the sleeve 14 with the conductive parts 20 and Figs. 11b and 11c are sectional views along the lines E-E and F-F in Fig. 11a respectively.

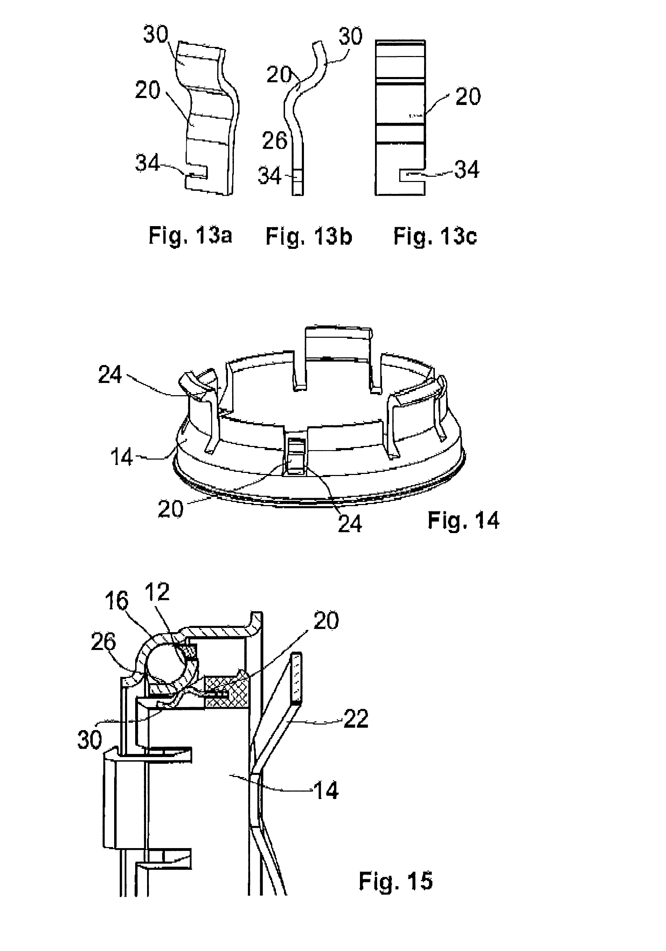

Figs. 13a - 13c, 14 and 15 illustrate a sixth embodiment of the angular contact bearing assembly with a conductive part 20, wherein the conductive part 20 is integrally moulded or overmoulded with the sleeve 14.

For manufacturing the sleeve 14, tongue-like conductive parts 20 as shown in Figs. 13a - 13c are arranged in a mould for moulding the sleeve 14 in an injection moulding process such that fixing-or anchoring portions 34 like holes in the conductive parts 20, which may be provided with barbs or a zig-zag profile to improve the fixation, are immersed in the polymer material used when the latter sets. In the sixth embodiment of the invention, the anchoring portions 34 are formed as lateral cut-outs.

In further alternative embodiments, the contacting portions 26, 30 protrude from the plastic material of the sleeve 14 in different points.

As in the fourth embodiment, the sleeve 14 is provided with recesses 24, from the bottom of which the conductive parts 20 protrude axially in an s-shape which is configured such that a first convex contacting portion 26 for contacting the inner ring 12 of the bearing assembly and a second convex contacting portion 30 contacting the shaft 10 are created.

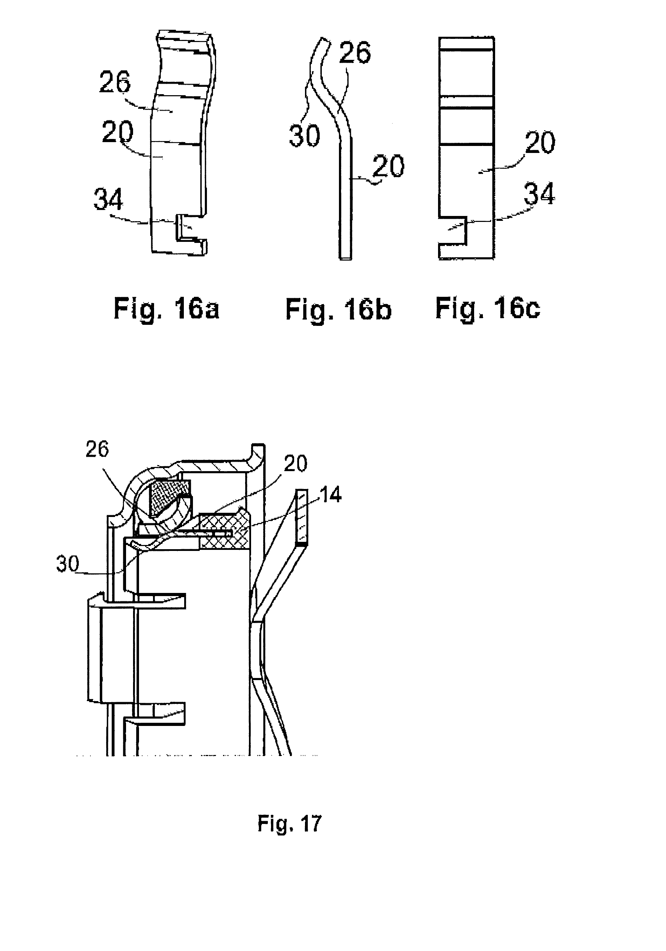

Figs. 16a - 16c and 17 illustrate a sixth embodiment of the angular contact bearing assembly with a conductive part 20, wherein the conductive part 20 is integrally moulded or overmoulded with the sleeve 14.

The only feature differing from the fifth embodiment of the invention is the shape of the protruding portion of the condictive part 20, which has a flatter shape which does not protrude axially over the axially outer surface of the anchoring portion 34 fixed in the bottom of the recess 24 of the sleeve.

## Claims

1. Angular contact bearing assembly for use in a steering column, comprising;
- at least one rolling bearing comprising conductive components;
- a sleeve (14) for mounting the at least one conductive rolling bearing on a shaft (10); and
- at least one conductive part (20) creating an electrically conductive contact between at least one of the conductive components (12) of the at least one rolling bearing and the shaft (10),
**characterized in that**
said conductive part (20) has a circumferential extension of less than 360°.

2. Angular contact bearing assembly according to claim 1,
**characterized in that**
the at least one rolling bearing comprises:
- a conductive inner ring (12) with a concave recess forming a first raceway;
- a conductive outer ring (16) with a concave recess forming a second raceway;
- a set of conductive rolling elements (18) contacting both the first raceway and the second raceway.

3. Angular contact bearing assembly according to claim 1 or 2,
**characterized in that**
said conductive part (20) has a circumferential extension of less than 5°.

4. Angular contact bearing assembly according to one of claims 1 to 3,
**characterized in that**
said conductive part (20) is formed as a clip snapped on a brim of the sleeve (14).

5. Angular contact bearing assembly according to one of claims 1 to 4, **characterized in that** the sleeve (14) is provided with a recess (24) with a circumferential extension corresponding to the circumferential extension of the conductive part (20).

6. Angular contact bearing assembly according to claim 5, characterized that said recess (24) comprises an axial recess in a brim of the sleeve (14).

7. Angular contact bearing assembly according to one of the preceding claims, **characterized by** being provided with multiple conductive parts (20) distributed over the circumference of the sleeve (14).

8. Angular contact bearing assembly according to one of the preceding claims, **characterized in that** the conductive part (20) is provided with a first flexible portion (26) contacting the conductive inner ring (12), wherein said first flexible portion (26) is configured such that it is deformed and preloaded when fitting the conductive inner ring (12) over the sleeve (14).

9. Angular contact bearing assembly according to one of the preceding claims, **characterized in that** the conductive part (20) is provided with a second flexible portion (30) configured to contact the shaft (10), wherein said second flexible portion (30) is configured such that it is deformed and preloaded when fitting the assembly including the sleeve (14) and the conductive part (20) over the shaft (10).

10. Angular contact bearing assembly according to one of claims 7 and 8, **characterized in that** the conductive part (20) has a generally C-shaped body part configured to be snapped on a brim or into a recess (24) of the sleeve (14), wherein at least one of the first and the second flexible portion (30) is formed as a tongue protruding from one end of the body part.

11. Angular contact bearing assembly according to one of the preceding claims, **characterized in that** the conductive part (20) is generally strip-shaped and is provided with an anchoring portion (34) in which the width of the strip is increased as compared to other portions of the conductive part (20), wherein a recess (24) having a neck portion is provided in the sleeve (14), the width of the neck portion corresponding to the width of said other portions of the conductive part (20).

12. Angular contact bearing assembly according to claim 11, **characterized in that** the conductive part (20) has a generally T-shaped structure wherein a transversal bar forms the anchoring portion (34).

13. Angular contact bearing assembly according to one of the preceding claims, **characterized by** further comprising a wavy spring (22) abutting to an axial end face of the sleeve (14) in order to generate an axial preload of the angular contact bearing assembly, wherein said wavy spring (22) is separate from the conductive part (20),

14. Angular contact bearing assembly according to one of the preceding claims, **characterized in that** the conductive part (20) is integrally moulded with the sleeve (14).

15. Steering column for an automotive vehicle comprising a chassis with a mounting support (42), a shaft (10) and at least one angular contact bearing assembly according to one of the previous claims mounted on the chassis mounting support (42) and supporting the shaft (10).

## Patentansprüche

1. Schrägkugellageranordnung zur Verwendung in einer Lenksäule, aufweisend:
- mindestens ein Wälzlager, das leitfähige Bauteile aufweist;
- eine Buchse (14) zum Anbringen des mindestens einen leitfähigen Wälzlagers an einer Welle (10); und
- mindestens ein leitfähiges Teil (20), das einen elektrisch leitfähigen Kontakt zwischen mindestens einem der leitfähigen Bauteile (12) des mindestens einen Wälzlagers und der Welle (10) herstellt;
**dadurch gekennzeichnet, dass**
das leitfähige Teil (20) eine Umfangsausdehnung von weniger als 360° aufweist.

2. Schrägkugellageranordnung nach Anspruch 1,
**dadurch gekennzeichnet, dass**
das mindestens eine Wälzlager Folgendes aufweist:
- einen leitfähigen Innenring (12) mit einer konkaven Aussparung, die einen ersten Laufring ausbildet;
- einen leitfähigen Außenring (16) mit einer konkaven Aussparung, die einen zweiten Laufring ausbildet;
- einen Satz leitfähige Rollelemente (18), die den ersten Laufring und den zweiten Laufring berühren.

3. Schrägkugellageranordnung nach einem der Ansprüche 1 oder 2, **dadurch gekennzeichnet, dass**
das leitfähige Teil (20) eine Umfangsausdehnung von weniger als 5° aufweist.

4. Schrägkugellageranordnung nach einem der Ansprüche 1 bis 3, **dadurch gekennzeichnet, dass**
das leitfähige Teil (20) als Clip ausgebildet ist, der auf einen Rand der Buchse (14) aufgeschnappt ist.

5. Schrägkugellageranordnung nach einem der Ansprüche 1 bis 4, **dadurch gekennzeichnet, dass** die Buchse (14) mit einer Aussparung (24) mit einer Umfangsausdehnung versehen ist, die der Umfangsausdehnung des leitfähigen Teils (20) entspricht.

6. Schrägkugellageranordnung nach Anspruch 5, **dadurch gekennzeichnet, dass** die Aussparung (24) eine axiale Aussparung in einem Rand der Buchse (14) aufweist.

7. Schrägkugellageranordnung nach einem der vorhergehenden Ansprüche, **dadurch gekennzeichnet, dass** sie mit mehreren leitfähigen Teilen (20) versehen ist, die über den Umfang der Buchse (14) hinweg verteilt sind.

8. Schrägkugellageranordnung nach einem der vorhergehenden Ansprüche, **dadurch gekennzeichnet, dass** das leitfähige Teil (20) mit einem ersten flexiblen Abschnitt (26) versehen ist, der den leitfähigen Innenring (12) berührt, wobei der erste flexible Abschnitt (26) derart konfiguriert ist, dass er beim Passen des leitfähigen Innenrings (12) über die Buchse (14) verformt und vorbelastet wird.

9. Schrägkugellageranordnung nach einem der vorhergehenden Ansprüche, **dadurch gekennzeichnet, dass** das leitfähige Teil (20) mit einem zweiten flexiblen Abschnitt (30) versehen ist, der zum Berühren der Welle (10) konfiguriert ist, wobei der zweite flexible Abschnitt (30) derart konfiguriert ist, dass er beim Passen der Anordnung mit der Buchse (14) und dem leitfähigen Teil (20) über die Welle verformt und vorbelastet wird.

10. Schrägkugellageranordnung nach einem der Ansprüche 7 und 8, **dadurch gekennzeichnet, dass** das leitfähige Teil (20) ein im Allgemeinen C-förmiges Körperteil aufweist, das zum Aufschnappen auf einen Rand oder Einschnappen in eine Aussparung (24) der Buchse (14) konfiguriert ist, wobei mindestens einer des ersten und des zweiten flexiblen Abschnitts (30) als Zunge ausgebildet ist, die von einem Ende des Körperteils vorsteht.

11. Schrägkugellageranordnung nach einem der vorhergehenden Ansprüche, **dadurch gekennzeichnet, dass** das leitfähige Teil (20) im Allgemeinen streifenförmig ist und mit einem Verankerungsabschnitt (34) versehen ist, bei dem die Breite des Streifens im Vergleich zu anderen Abschnitten des leitfähigen Teils (20) vergrößert ist, wobei eine Aussparung (24) mit einem Halsabschnitt in der Buchse (14) vorgesehen ist, wobei die Breite des Halsabschnitts der Breite der anderen Abschnitte des leitfähigen Teils (20) entspricht.

12. Schrägkugellageranordnung nach Anspruch 11, **dadurch gekennzeichnet, dass** das leitfähige Teil (20) eine im Allgemeinen T-förmige Struktur aufweist, wobei eine Querstange den Verankerungsabschnitt (34) ausbildet.

13. Schrägkugellageranordnung nach einem der vorhergehenden Ansprüche, **dadurch gekennzeichnet, dass** sie ferner eine Wellfeder (22) aufweist, die zum Erzeugen einer axialen Vorbelastung der Schrägkugellageranordnung an eine axiale Endfläche der Buchse (14) angrenzt, wobei die Wellfeder (22) separat vom leitfähigen Teil (20) ist.

14. Schrägkugellageranordnung nach einem der vorhergehenden Ansprüche, **dadurch gekennzeichnet, dass** das leitfähige Teil (20) einstückig mit der Buchse (14) geformt ist.

15. Lenksäule für ein Kraftfahrzeug, aufweisend ein Chassis mit einer Montagestütze (42), einer Welle (10) und mindestens einer Schrägkugellageranordnung gemäß einem der vorhergehenden Ansprüche, die an der Chassismontagestütze (42) angebracht ist und die Welle (10) stützt.

## Revendications

1. Ensemble de roulement à contact angulaire destiné à être utilisé dans une colonne de direction, comprenant :
- au moins un palier de roulement comprenant des composants conducteurs ;
- un manche (14) pour fixer l'au moins un palier de roulement conducteur sur un arbre (10) ; et
- au moins une partie conductrice (20) créant un contact électriquement conducteur entre au moins un des composants conducteurs (12) de l'au moins un palier de roulement et l'arbre (10) ;
**caractérisé en ce que** :
ladite partie conductrice (20) a une extension circonférentielle inférieure à 360°.

2. Ensemble de roulement à contact angulaire selon la revendication 1, **caractérisé en ce que** l'au moins un palier de roulement comprend :
- une bague intérieure conductrice (12) avec un renfoncement concave formant un premier chemin de roulement ;
- une bague extérieure conductrice (16) avec un renfoncement concave formant un second chemin de roulement ;
- un ensemble d'éléments de roulement conducteurs (18) entrant en contact tant avec le premier chemin de roulement qu'avec le second chemin de roulement.

3. Ensemble de roulement à contact angulaire selon la revendication 1 ou 2, **caractérisé en ce que** ladite partie conductrice (20) a une extension circonférentielle inférieure à 5°.

4. Ensemble de roulement à contact angulaire selon l'une quelconque des revendications 1 à 3, **caractérisé en ce que** ladite partie conductrice (20) prend la forme d'un clip pressionné sur un bord du manche (14).

5. Ensemble de roulement à contact angulaire selon l'une quelconque des revendications 1 à 4, **caractérisé en ce que** le manche (14) est pourvu d'un renfoncement (24) avec une extension circonférentielle correspondant à l'extension circonférentielle de la partie conductrice (20).

6. Ensemble de roulement à contact angulaire selon la revendication 5, **caractérisé en ce que** ledit renfoncement (24) comprend un renfoncement axial dans un bord du manche (14).

7. Ensemble de roulement à contact angulaire selon l'une quelconque des revendications précédentes, **caractérisé en ce qu'**il est pourvu de multiples parties conductrices (20) réparties sur l'ensemble de la circonférence du manche (14).

8. Ensemble de roulement à contact angulaire selon l'une quelconque des revendications précédentes, **caractérisé en ce que** la partie conductrice (20) est pourvue d'une première partie flexible (26) entrant en contact avec la bague intérieure conductrice (12), dans lequel ladite première partie flexible (26) est configurée de telle sorte qu'elle est déformée et préchargée lors de la mise en place de la bague intérieure conductrice (12) sur le manche (14).

9. Ensemble de roulement à contact angulaire selon l'une quelconque des revendications précédentes, **caractérisé en ce que** la partie conductrice (20) est pourvue d'une seconde partie flexible (30) configurée pour entrer en contact avec l'arbre (10), dans lequel ladite seconde partie flexible (30) est configurée de telle sorte qu'elle est déformée et préchargée lors de la mise en place de l'ensemble comprenant le manche (14) et la partie conductrice (20) sur l'arbre (10).

10. Ensemble de roulement à contact angulaire selon l'une quelconque des revendications 7 et 8, **caractérisé en ce que** la partie conductrice (20) a une partie de corps généralement en forme de C configurée pour être pressionnée sur un bord ou dans un renfoncement (24) du manche (14), dans lequel au moins une partie parmi la première et la seconde partie flexible (30) prend la forme d'une languette saillant hors d'une extrémité de la partie de corps.

11. Ensemble de roulement à contact angulaire selon l'une quelconque des revendications précédentes, **caractérisé en ce que** la partie conductrice (20) prend généralement une forme de bande et est pourvue d'une partie d'ancrage (34) dans laquelle la largeur de la bande est accrue par rapport aux autres parties de la partie conductrice (20), dans lequel un renfoncement (24) ayant une partie de col est prévu dans le manche (14), la largeur de la partie de col correspondant à la largeur desdites autres parties de la partie conductrice (20).

12. Ensemble de roulement à contact angulaire selon la revendication 11, **caractérisé en ce que** la partie conductrice (20) a une structure généralement en forme de T dans laquelle une barre transversale forme la partie d'ancrage (34).

13. Ensemble de roulement à contact angulaire selon l'une quelconque des revendications précédentes, **caractérisé en ce qu'**il comprend en outre un ressort ondulé (22) butant contre une face d'extrémité axiale du manche (14) afin de générer une précharge axiale de l'ensemble de roulement à contact angulaire, dans lequel ledit ressort ondulé (22) est séparé de la partie conductrice (20).

14. Ensemble de roulement à contact angulaire selon l'une quelconque des revendications précédentes, **caractérisé en ce que** la partie conductrice (20) est intégralement moulée avec le manche (14).

15. Colonne de direction pour un véhicule automobile comprenant un châssis avec un support de fixation (42), un arbre (10) et au moins un ensemble de roulement à contact angulaire selon 1"une quelconque des revendications précédentes fixé sur le support de fixation de châssis (42) et supportant l'arbre (10).
